# EUROPEAN PATENT APPLICATION

(11) **EP 1 429 291 A1**
(43) Date of publication of application: **16.06.2004**
(21) Application number: 03008340.6
(22) Date of filing: 10.04.2003
(51) Int. Cl.: G06T 11/00, H04M 1/00

(54) **System and method for implementing avatars in a mobile environment**

(30) Priority: 12.12.2002 EP 02445174
(71) Applicant: Sony Ericsson Mobile Communications AB, 221 88 Lund (SE)
(72) Inventor: Sundström, Henrik, 245 61 Staffanstorp (SE); König, Max, 214 33 Malmö (SE); Kalsson, Mattias, 227 62 Lund (SE); Hakansson, Johannes, 241 37 Eslöv (SE)
(74) Representative: Lindberg, Olle Nils Olof

(57) **Abstract**

The invention relates means and methods for providing an avatar concept suitable for implementation on a mobile platform, such as a mobile phone, e.g. by using XML. For one thing, the invention involves a device for creating or modifying an avatar for a mobile platform, comprising a display and a computer program system. The device includes an avatar data library, holding data code representing avatar parts, and an avatar editor having an interface to said avatar data library, said editor including means for selecting, from said avatar data library, an avatar attribute from a set of avatar attributes, and an avatar part from a set of avatar parts, for said avatar attribute, and means for saving the avatar with said avatar part allocated to said avatar attribute.

## Description

### Field of the invention

The present invention relates to means for graphically representing a user, such as by an image devised to be displayed on a display, so called avatars. Particularly, the invention relates to means and functions for providing an avatar concept suitable for implementation on a mobile platform, such as a mobile phone.

### Background

In recent years it has become very popular to personalise the look of your mobile phone. The introduction of colour displays drastically increases the number of areas you could personalise. For some time it has been possible to associate a ring signal with a contact in the phone book. With a colour display and a higher resolution association of images with contacts is also plausible. This way of letting some sort of image, an avatar, represent a user can be seen in games and discussion forums on the Internet.

The set of images shipped with a mobile phone is usually very limited and not always suited to be an avatar. With a digital camera integrated in the mobile phone or as an accessory it would be possible to use photos of your friends as avatars. These photos are however rather gloomy and hard to distinguish from each other at a quick glance. They also stand in stark contrast to the rest of the graphics in the phone.

A better solution would be a specialised editor with an easy way of creating avatars, and a special file format representing the avatar. The graphics of these avatars would be more integrated with the rest of the phone and you could add the possibility of making animated avatar.

### Abbreviations

- B64 encoding: Base 64 encoding is an encoding standard that encodes 24 bits into four printable characters.

- MIME: Multipurpose Internet Mail Extensions. A standard that provides the ability to transfer none textual data on the internet.
- Bluetooth: A standard for short range wireless communication between digital devices, such as mobile phones PDA's.
- IR: InfraRed waves. Electromagnetic waves with slightly less frequency than visible light. Frequently used in remote controls.
- WAP: Wireless Application Protocol. A protocol for accessing the internet from mobile devices.
- MMS: Multimedia Messaging Service. A development of SMS that can send sound, images and video as well as text.
- XML: Extensible Markup Language. A W3C standard for markup languages.
- RGB: Red Green Blue. A colour model where the colour of a pixel is determined by the amount of red green and blue it contains.
- CMYK: Cyan Magenta Yellow Key. A colour model normally used for printing. Each colour is described with the amount of secondary colour and key (black) it contains.
- GIF: Graphics Interchange Format. A widely used standard for compressed Images.
- FAP: Facial Animation Parameter. A set of parameters which describes an animation of One or more parts of a facial animation object in the MPEG- 4 standard.
- FDP: Facial Description Parameter. A set of parameters that describes the appearance of a part in a facial animation object in the MPEG-4 standard.

### Summary of the invention

An overall object of the invention is to provide means for introducing the avatar concept into a mobile environment. Part of the challenge is of course the platform. Most obvious is the physical limitations the platform has, it is for example not possible to use high definition images, they would simply not fit in the display. These limitations are more or less known. The software available in the platform is also a limiting factor. Always when working in a mobile environment, some people talk about limitations and some about assets. For example, today' s workstation often comes with a 19 inch monitor with a maximum resolution of 1600x1200 pixels and millions of colours, compared with a mobile phone display which have a resolution of 101x33 with 2 colours, it may seem like a limitation.

In order to target the stated object the present invention relates, according to a first aspect, to a method for creating or modifying an avatar for a mobile platform, comprising the steps of:
- activating an avatar editor software;
- displaying an avatar;
- selecting an avatar attribute from a set of avatar attributes;
- selecting an avatar part from a set of avatar parts, for said avatar attribute; and
- saving the avatar with said avatar part allocated to said avatar attribute.

Preferably, said method comprises the step of saving information on the parts included in said avatar as an XML document.

In one embodiment, the method comprises the steps of:
- displaying said avatar on a first portion of a display;
- displaying a menu for selection of avatar attributes and parts on a second portion of said display; and
- displaying a change in said avatar on said first portion responsive to a selection made in said menu.

In one embodiment, said avatar includes information associated with an image comprising a digitised visualisation of at least a head.

Preferably, said avatar attributes relate to different parts of a human head.

Furthermore, said avatar parts preferably relate to variants of said parts of a human head.

Preferably, said avatar attributes relate to at least eyes, mouth and hair.

In one embodiment, the step of displaying an avatar comprises the steps of:
- retrieving data from a parts buffer comprising a matrix of pointers to bitmaps, in which matrix avatar parts of said avatar are allocated to different layers; and
- displaying the avatar in least layer first order of said buffer.

Preferably, the method comprises the steps of:
- packing XML code of said XML file together with an image data file to which said avatar relates, into a data segment; and
- sending said data segment from a first communication terminal to a second communication terminal.

According to a second aspect, the invention relates to a device for creating or modifying an avatar for a mobile platform, comprising a display and a computer program system, comprising an avatar data library, holding data code representing avatar parts, and an avatar editor having an interface to said avatar data library, said editor including means for selecting, from said avatar data library, an avatar attribute from a set of avatar attributes, and an avatar part from a set of avatar parts, for said avatar attribute, and means for saving the avatar with said avatar part allocated to said avatar attribute.

In one embodiment, said editor comprises means for saving information on the parts included in said avatar as an XML document.

Preferably, said editor comprises display control means for displaying said avatar on a first portion of said display, displaying a menu for selection of avatar attributes and parts on a second portion of said display, and displaying a change in said avatar made by said editor on said first portion responsive to a selection made in said menu.

In one embodiment, said avatar includes information associated with an image comprising a digitised visualisation of at least a head.

Preferably, said avatar attributes relate to different parts of a human head.

In one embodiment, said avatar parts relate to variants of said parts of a human head.

Preferably, said avatar attributes relate to at least eyes, mouth and hair.

In one embodiment, said editor comprises a parts buffer including a matrix of pointers to bitmaps, in which matrix avatar parts of said avatar are allocated to different layers, wherein said display control means are devised to display the avatar in least layer first order of said buffer.

Preferably, said parts buffer has one row for each attribute and one column for each layer of an avatar.

In a preferred embodiment, said device is a portable radio communication terminal.

In one embodiment, said device comprises means for packing XML code of said XML file together with an image data file to which said avatar relates, into a data segment, and data transmission means for sending said data segment from a first communication terminal to a second communication terminal.

According to a third aspect, the invention relates to a data signal including a data segment comprising XML code of an XML file together with an image data file to which an avatar relates.

According to a fourth aspect, the invention relates to a computer program product for use in a computer system, comprising computer program code for making said computer system execute the steps recited above.

### Brief description of the drawings

The features and advantages of the present invention will be apparent from the following description of the invention and preferred embodiments, with reference to the accompanying drawings, on which
Fig. 1 schematically illustrates a communication terminal;
Fig. 2 illustrates a generic face model;
Fig. 3 schematically illustrates how tags are related according to an embodiment of the invention;
Fig. 4 schematically illustrates the layout of an avatar XML file;
Fig. 5 schematically illustrates an embodiment a the facial tool according to the invention;
Fig. 6 schematically illustrates the key layout on a mobile phone on which the present invention is applied;
Fig. 7 schematically illustrates parts of a library tree structure, and corresponding menu choices in a Face It application according to the invention;
Fig. 8 schematically shows key features of a Face It editor according to the invention;
Fig. 9 schematically shows how an avatar would be drawn according to an embodiment of the invention;
Fig. 10 schematically shows navigation through avatars with a terminal joystick; and
Fig. 11 schematically illustrates an embodiment of softkey features according to the invention.

### Description of the invention

The present description relates to the field of communication terminals, and particularly radio communication terminals. The term radio terminal or communication terminal, also denoted terminal in short in this disclosure, includes all mobile equipment devised for radio communication with a radio station, which radio station also may be mobile terminal or e.g. a stationary base station. Consequently, the term radio terminal includes mobile telephones, pagers, communicators, electronic organisers, smartphones, PDA:s (Personal Digital Assistants) and DECT terminals (Digital Enhanced Cordless Telephony). Hence, although the structure and characteristics of the antenna design according to the invention is mainly described herein, by way of example, in the implementation in a mobile phone, this is not to be interpreted as excluding the implementation of the inventive antenna design in other types of radio terminals, such as those listed above. Furthermore, it should be emphasised that the term comprising or comprises, when used in this description and in the appended claims to indicate included features, elements or steps, is in no way to be interpreted as excluding the presence of other features elements or steps than those expressly stated.

Exemplary embodiments will now be described with references made to the accompanying drawings.

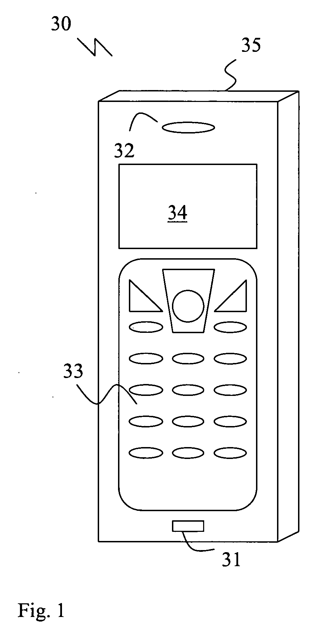

Fig 1 illustrates a radio-communication terminal 30, in the form of a cellular phone. Terminal 30 is carried in a housing or chassis 35, directly or indirectly supporting the other components of the terminal. Terminal 30 is devised with a user-input interface comprising a microphone 31 and a keypad 33. Furthermore, a user output interface of the terminal 30 comprises a loudspeaker 32 and a display 34. All of these features are well known in the prior art. Though not shown, the communication 30 further includes radio transmission and reception electronics, an antenna and a power supply in the form of a battery. Communication terminal 30 is also devised with a computer system, including a microprocessor with associated memory and software.

Today, there are many different phones provided on the market with multimedia capabilities. Since the application of the invention is highly graphical, a phone with a colour display is to prefer. Therefore the Sony Ericsson ® T68i has been the choice of target platform in the embodiment described herein, although it should be made clear that this is only one example of an existing radio communication terminal on which the invention could be implemented. The T68i has a range of communication possibilities which can be used to distribute and share the avatars, and it is a two processor based system. One application processor (AVR processor from Amtel) and a digital signal processing unit (DSP) used for complex calculations in GSM communication. The application processor is a 8-bit processor with 16 Mb addressable memory space, with about 40-483 Kb installed. However, the disclosed embodiment of the present invention only executes code on the application processor. Some of the features of the T68i are: Bluetooth, e-mail, MMS, EMS, WAP 2.0, picture phonebook, and a 101x80 256 colour display.

Sony Ericsson currently uses the OSE operating system. It's a multitasking real time OS with inteT process communication. Due to portability requirements by Sony Ericsson, no direct requests to the OS are allowed. Instead the communication is done with signals and requests via a software backplane (SwBP). The target platform is highly developed and there exist an extensible API for user interface and communication with different protocols and media, such as IR, MMS and Bluetooth.

Developing in a mobile phone environment can be hard as it's a quite closed one. The cure is to first implement the application on in a simulated environment with extended debug capabilities before trying anything on the mobile phone. This ensures great time savings and cures frustration due to lack of information of what went wrong. However, this is a simulated environment and some differences exist. For example, a Windows environment typically has a stack size of 32 Mb, and grows if the stack gets full, which is huge compared to the stack size of a typical embedded system. Also a typical workstation today has a processor working at 1300 MHz compared to the processor in the mobile phone which is working at a much lower clock frequency. So even if the application is running smooth in the simulator, there are no guarantees it will in the mobile phone.

Often when joining a big development project the choice of programming language is not available. When OUT project started we actually bad a choice. Today, all software on mobile platforms is developed in the C language. However, there exists a Java engine on OUT platform today, which will make development in Java possible. The big advantage of using Java is that it will make the application easier to port to other platforms. On the other hand one can not be sure that all functionality on the platform can be reached from Java. And Java is not well known for its. speed, with the limitations of the hardware the platform presents, it is probably a better idea to choose C as development language.

Preferably, an interpreted, interactive, object-oriented programming language is used, incorporating modules, exceptions, dynamic typing, very high level dynamic data types, and classes. Furthermore, the programming language should be, devised to run on many brands of UNIX, on the Mac, and on PCs under MS-DOS, Windows, Windows NT, and OS/2.

This programming language is used when implementing what is herein referred to as the Facialtool, which will be described below.

The present invention has emerged during research and when development towards a specification relating to a so called Face Editor. Here is a list of key features:

| | |
|---|---|
| Browser | The managing of a users faces should be done via a |
| browser. From the browsers all functions associated with avatars can be reached. | |
| Editor | An editor for creating and editing faces. |
| Library file | Library handling for the editor. The library should hold the |
| face parts available and rendering information. | |
| XML file format | If no other format is found the avatar should be defined in |
| an XML-based language, and a DTD for that language should also be defmed. | |
| Export | It should be possible to export the face to some picture |
| format. | |
| Send | There should be some way of exchanging your faces. |

The editor is extensible and not locked to a face editor but rather an avatar editor. The avatar editor is of course capable of editing faces.

The avatar is a representation of a user, normally displayed on screen as an image, but not necessarily stored as an image, in a multi-user or virtual reality environment. On the mobile platform it could be displayed when receiving a call or a message from a user. As the displays grow bigger the avatar could also be displayed in the contact list, in chats and games.

The most important aspects of the avatar concept are the creation of the avatar and the ability to associate the created avatars with contacts. To make it more appealing to the user it should be possible to send an avatar to your friends and to upgrade the editor, increasing the number different avatars you could create.

One of the key features of the invention is the ability to associate an avatar with a contact, so that when the contact calls, the avatar is shown. The function already exists for images and it would work the same for an avatar, that is, you reach the function from the avatar browser options menu. The browsing function includes a number of operations that can be performed on each avatar in the system. This includes:
Add a new avatar;
Edit an existing avatar;
Send an avatar;
Add an avatar to contact
Rename an avatar;
Delete an avatar.

Some of these features are preferably also available in option menu of the avatar editor.

With an editor the user is able to create new or edit existing avatars. Functions for changing different avatar attributes and options for saving the avatar (and exporting the avatar) are provided.

The user interface of the editor is highly intuitive and well planned due to the combination of both text and images on the display.

It is possible to export an avatar to image in format such as GIF or JPEG. However there is no way of converting an image to an avatar. Once the avatar is exported to an image the possibility to edit the avatar is gone.

Since the number of avatars you could create with a static library is limited it is preferable that the library is upgradeable. The upgrade preferably works seamlessly, so that opening an avatar with parts that are not in the library these parts are automatically integrated into the library.

The application has high usability. This is achieved through an intuitive user interface and high extensibility of the part library. If the user thinks of the user interface as easy to use, then most likely the application will be used by a larger group of people. The extensibility of such an application is vital for a success. In compare with ring-tone evolution towards more personalised ring-tones (the possibility to download ring-tones to the phone), which started a brand new market, the application has to continuously arouse the user' s curiosity.

There are several examples of the use of avatars. On the internet excite chat and yahoo games let you chose an avatar amongst a set of images. They do not how ever let you create the images. There are also programs that can create avatars. These programs are strictly avatar creation programs and not connected to any special use. Role playing games is one example of the combination of creation and usage of an avatar.

The design of the application is highly coupled with choice of description of graphics. Even if this project is not a complicated graphical application it's important to know the theory behind computer graphics. The choice of graphics model will highly affect the design of the application. Computer graphics is often categorised in three major classes described below: bitmap graphics, vector graphics, and 3D graphics.

With the bitmap graphics the image is built of small square elements called pixels. Each pixel has a colour value which is translated by corresponding colour model (RGB, CMKY, etc). All the pixels together describe the image. The advantage of the bitmap model is the control of each pixel when creating the image. It is also easier to make nicer images with bitmap model.

Vector graphics is the format where an image is described by the geometrical shapes it contains. The advantages are that the images are scalable and they tend to be smaller than bitmap images. With vector graphics it is also easy to change the colour of an object, for ex ample skin colour or hair colour. The downside is that the images can look a bit geometrical, wherein the avatar looks artificial as a result of the use of simple vector graphics.

3D graphics is a combination of vector and bitmap graphics with the addition of a third dimension. An avatar implementation based on 3D graphic is be very flexible. The avatar could be scaled to fit different display sizes, and it could be displayed from different angels. The display sizes and the processing power of existing mobile phones is however currently not enough to support 3D rendered avatars.

MPEG-4 is an ISO/IEC standard developed by MPEG (Moving Picture Experts Group), the committee that also developed standards known as MPEG-1 and MPEG-2. It provides the standardised technological elements enabling the integration of the production, distribution ant content access of the following three fields: Digital television, Interactive graphics applications with synthetic content, and Interactive multimedia.

The interesting field for the present invention is within the synthetic content field. It includes standards for description and transformation of several synthetic objects into graphical applications.

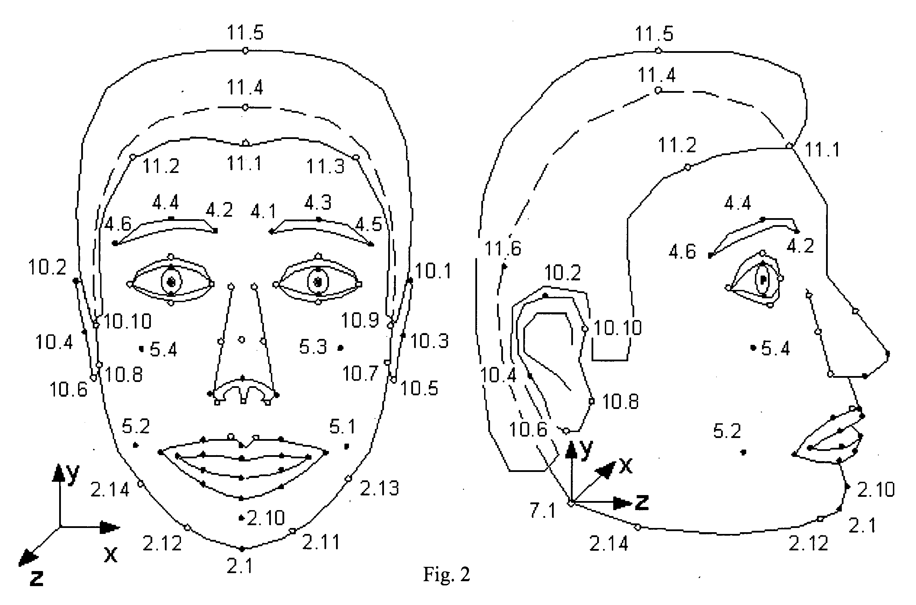

The facial animation object is used to render an animated face. The starting point is an expressionless generic face model with a number of points which description- and transform- operation can be applied to. Such a generic face model is shown in Fig. 2, which is an image from the standard ISO/IEC IS 14496-2. The model is constructed of different parts (nose, mouth, etc.), which in turn is a hierarchical structure of graphical building stones (also known as atoms). Each part (hierarchical structure) has a number of the above described points assigned to it. To these, Facial Definition Parameters (FDP) can be applied to change the appearance of specific parts to create a face. Facial Animation Parameters (FAP) can be applied to the face to make it express feelings such as anger sadness and joy.

The MPEG-4 standard seems almost like the perfect starting point for this project, and in many ways it is. However, in the generic face model there exist more than 500 facial description parameters which are far beyond the detail level suitable for the mobile platform of today. When there exists such a display that can handle this detail level, an application implementing the MPEG- 4 standard would be, by far, the most powerful and effective one.

In the 90' s HTML revolutionised internet because it was easy to create HTML pages with nice graphics, and the user could easily navigate the pages. In the beginning HTML was a data storage language, the data was then interpreted by a browser witch then showed it in a nice format to the user. Later it became more of a language for telling the browser how to show the data it contained.

In 1996 the extensible markup language (XML) was created with the experience of HTML and SGML (a markup language widely used in technical documentation) in mind. It is an open standard for storing and organising data. You can say that XML standardise the way you define markup languages. In XML there are no predefined tags, like there is in HTML. Instead there are files for defining your own tags. HTML is said to be a subset of XML, i.e. you could use XML to define HTML. The main advantages of XML are that it's platform independent, widely used and easy to understand. There already exist a lot of programs for editing, checking and reading XML, e.g. XMLSPY by Altova.

Even if XML has very strict rules for the document structure, some rules can't be defined to hold for all markup languages you could create. The flexibility of not having any predefined tags also means that there are no rules explaining witch tags can be contained in a certain tag. The document type definition DTD is the solution to this problem. Consider this example:

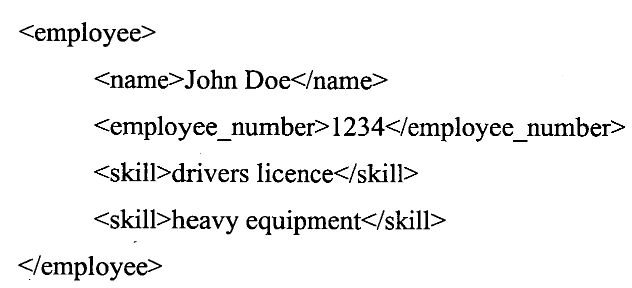

Say you had created this "employee markup language" and wanted the element "employee" to contain exactly one "name" and one "employee_number" element. Then you could create a DTD file declaring those rules. Below is an example of a Library XML DTD:

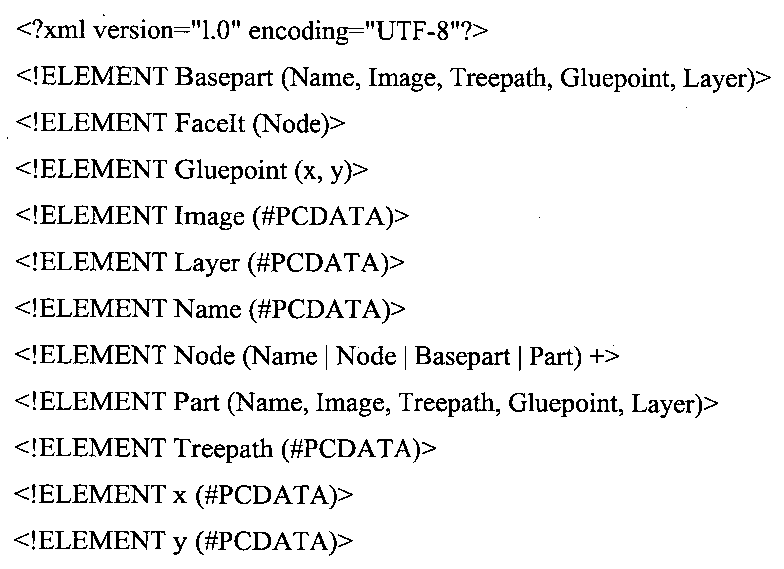

The fourth line tells us that the element (or tag) "Gluepoint" has exactly two child elements "x" and "y". The second last line means that the element "x" contains "parsed character data"; meaning raw text that does not contain any tags or child elements.

Sometimes you want to access the data in an XML document in another order than that in witch it is stored, or you want to change the content of the document. You could of course parse the document into a specialised tree structure and then code it back to XML. Or you could use the DOM (Document Object Model). DOM describes a platform and language independent interface that allows you to dynamically access XML documents. The DOM interface is implemented on a variety of platforms such as Java and C++. The way you access data in an XML document using DOM is the same for all platforms.

There are some drawbacks with DOM. Since it is not specialised the data structures tend to be big and the access of data in the document inconvenient. In embedded systems where memory is highly limited it can be better to use your own tree structure to represent the document.

The two major demands when designing the xml tags for the present invention was simple xml code and an extensible library. To be able to extend the library we couldn't have tags called "hair" because that would mean that when adding new tags the whole application had to be rewritten to accept the new tag.

We had to define two file types, one for the avatar and one for the library. The data they store is very similar, so we wanted the tags for the common data to be the same. An avatar can be of several types and each type has a set of attributes that can be changed. For the type "female face" for example the attribute "hair" can be changed. We call a specific hair a part. So each attribute of an avatar type has one or more parts. The parts are the data that the library and the avatar have in common.

The Part and Basepart tags and their child tags are the most important tags. They are valid both in the library and in an avatar. In the library they represent the choices the user has when he designs an avatar, and they are the building blocks of an avatar.

The Part and Basepart tags have to be standalone, so that when opening an avatar with a part that is not in the library the application would know where to fit it in. The Part, Basepart and their child tags explained:

| | |
|---|---|
| Part | Represents a part as described above; |
| Basepart | The part upon which all other parts are drawn; |
| Name | A parts name; |
| Treepath | The path through the library tree for a part; |
| Image | The image filename for a part. No image information. The images are stored in an own directory. This avoids duplets and thus saves space; |
| Layer | Part drawing information. A part with higher layer number is drawn above a part with lower layer number. This is normally called Z-buffer; |
| Gluepoint | Part drawing information. See child tags X and Y of this tag; |
| X | Drawing position on the x-axis for a part; |
| Y | Drawing position on the y-axis for a part. |

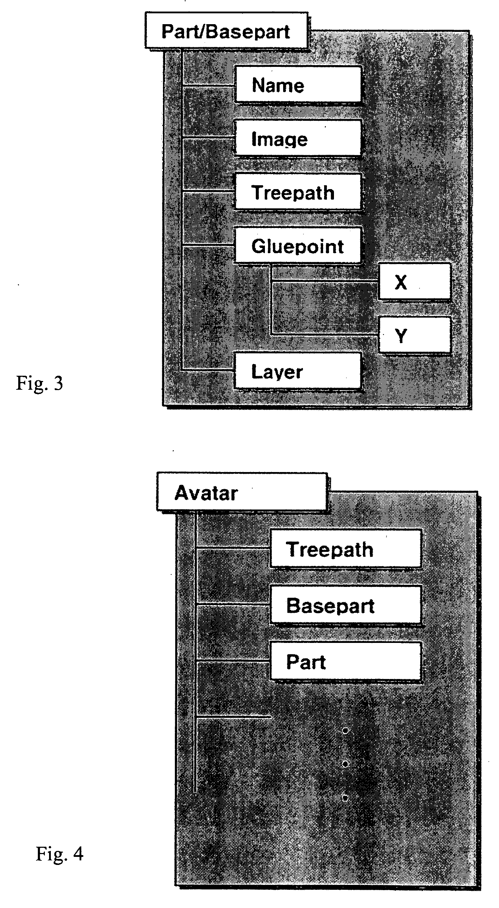

Fig. 3 shows how the tags are related. A more detailed description of the library XML DTD is given above. The avatar XML introduces only one new tag, the Avatar tag. This is the root tag for the document and it can contain several Part tags, one Basepart and one Treepath tag. The Treepath tag defines what type of an avatar it is. Fig. 4 illustrates the layout of the avatar XML file.

The library XML has to implement the tree structure above. Luckily, XML is well suited for describing hierarchal structures. So in addition to the tags above we added a Node tag, describing nodes in the tree. A Node tag has a name (represented by a Node tag) and either Node tags or Part and Basepart tags as child tags. The Part tag represents leaves in the tree. The root tag for the library file we called FaceIt.

The Treepath tag could seem unnecessary in the library since the information already exists in the tree structure of the document. We kept it to keep the parts of the library consistent with those of the avatars, so that creating an avatar from the library would be easy using DOM.

We decided to keep the extensions to the library in a separate XML file. This way if for some reason this file got corrupt it would not affect the core library. The extended library has no Node tags, there is just a root and a "list" of Parts and Basepart tags. After the Library has been parsed into a tree structure the extensions are parsed into the tree. To the user the extensions will seem an integrated part of the application.

All XML parsing and coding for the facialtool, described below, is done with the DOM implementation called minidom and an extension package called pyxml. The characteristics of DOM are that it is easy to parse a document, hut the resulting data structure is big and accessing the elements can be a bit inconvenient. As size and speed is critical when implementing on an imbedded system we decided against DOM. Instead we used a normal stateless parser (in XML it is called SAX, Simple API for XML) and used it to build a customised data structure.

When designing the facial tool, we wanted the test version of the library to include two avatar types with about ten attributes each. In total we estimated that the library would include up to 100 parts. It seemed a rather tedious process to write that big a file by hand, especially since all part had their coordinates and layer info that had to be figured out. Instead we built a graphical library creation tool.

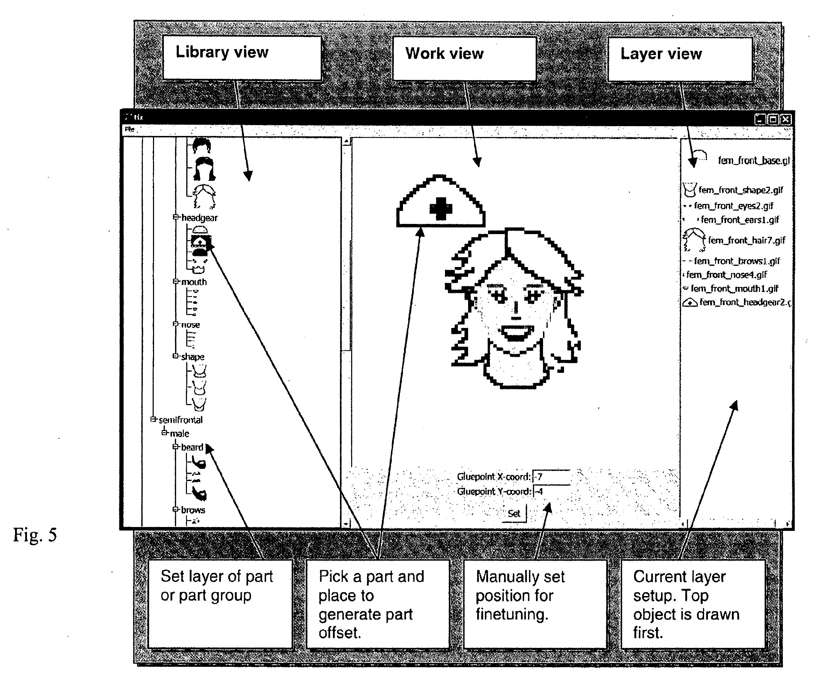

An embodiment of the facial tool is illustrated in Fig. 5. The tool derives the tree structure of the library file from the file system. Given a root directory the tool creates node elements from directories and part elements from image files. When the structure of the XML document is created you can select which part should be baseparts. Upon the baseparts you can place parts in there right (x, y) position. You can also set layer information for an entire attribute.

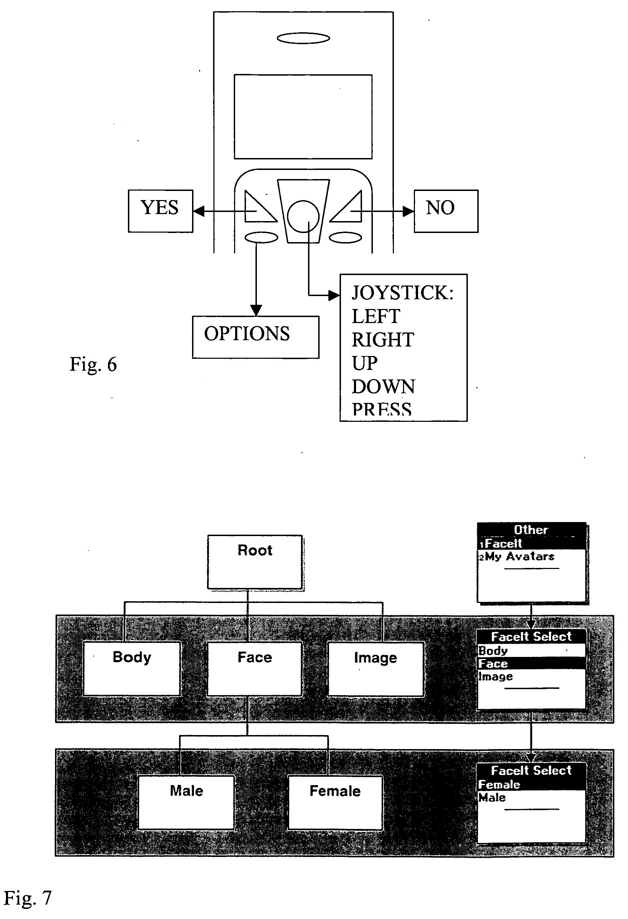

Face It is the application the user will use to create and edit avatars. Navigating the Face It application has to be easy since users normally do not read the manual. Preferably the navigation is similar to the rest of the phone, which for the present embodiment of T68i means using the joystick for navigation, the no button for back and the yes button as select. Fig. 6 and the table below explains the key layout and the function of each key in the dynamic menus and in the editor.

| Key | Editor | Dynamic menu |
|---|---|---|
| YES/J-Press | Save | Select |
| NO | Back | Back |
| Options | Options menu | - |
| J-Left/J-Right | Change Part | - |
| J-Up/J-Down | Menu navigation | Menu navigation |

From the users point of view Face It is an editor, but in reality it is more an interface to the library file. The menus in Face It is a reflection of the library file, so if the user extends the library by downloading more parts these parts will show up in Face It, as menu choices and new attributes.

Fig. 7 illustrates parts of the library tree structure to the left, and the corresponding menu choices you would get in the Face It application. Nodes at the same depth are choices in the same menu.

After selecting what type of avatar you want to create in the dynamic menu, you enter the editing part of Face It. The user interface had to be simple. A lot of the functionality would be in the browser so we wanted the editor just to edit and save avatars.

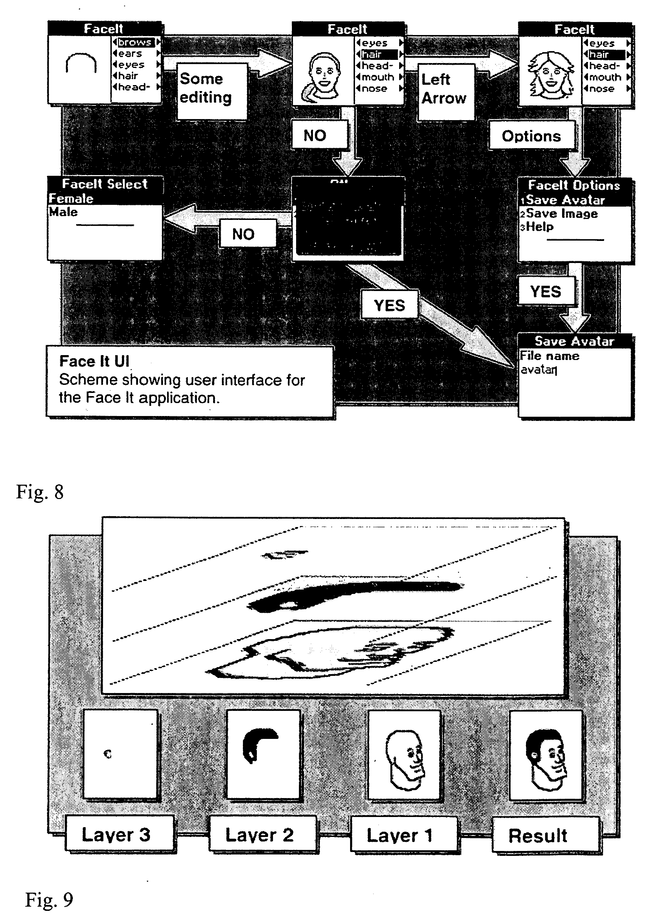

To the left in the editor you have the drawing area and to the right a menu. The menu, like the dynamic menu, is based upon the library. The items that appear are the attributes for the avatar type chosen in the dynamic menu. With the up and down arrow you navigate through the attributes and with left and right you change the selected attribute. Fig. 8 shows the key features of the Face It editor.

The drawing of an avatar in the editor is done with the help of a part buffer. The part butter is a matrix of pointers to bitmaps. In the butter there are one row for each attribute and one column for each layer in the current avatar. When a redraw is needed all non null pointers in the butter is drawn in least layer first order. Let us say for example that you have an avatar with two attributes, ears and hair, and a basepart. The basepart is in layer 1, the hair in layer 2 and the ear in layer 3. The avatar would then be drawn as shown in Fig. 9.

The browser is the heart of the avatar concept, it helps the user manage and organise his avatars. The avatar browser is built as the rest of the browsers on the platform.

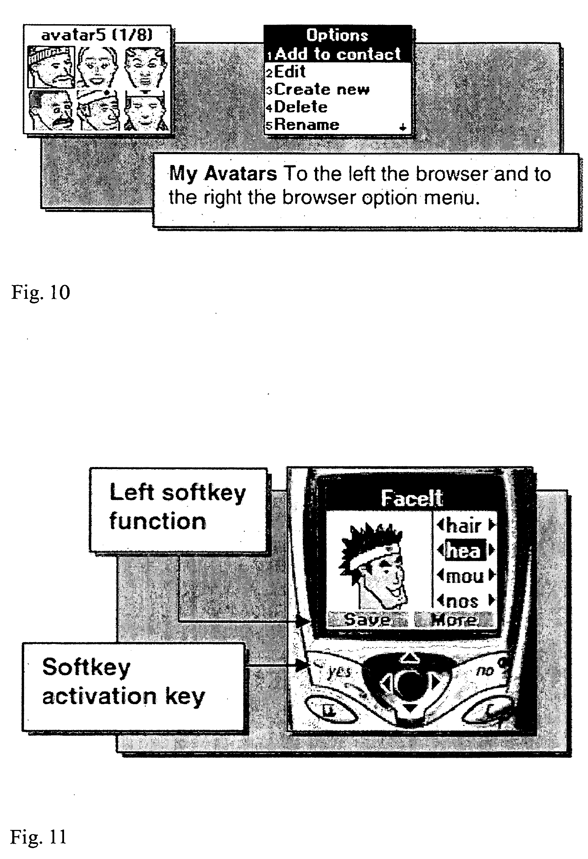

Under the menu "My Avatars" you find thumbnails of all avatars created or downloaded to the phone. You can navigate through the avatars with the joystick, pressing the options button brings up the options menu for the avatar currently selected. This is illustrated in Fig. 10.

Much of the functions for exchanging files via different types of media (such as Bluetooth or IR) are already implemented on the target platform. Much of the functionality for exchanging files is provided by the avatar browser.

Since the part library is upgradeable we cannot be sure that a receiver of an avatar has all parts that make up the avatar. The avatar XML contains all information on each individual part except the image, so the part images has to be sent with the XML code in case the recipient does not have all the part images.

There are essentially two ways of sending the images with the XML code. You could code the images (for example with B64 coding) and incorporate them in the XML code. Or you could just pack the XML code with the images. A preferred embodiment includes the second alternative since it is much simpler and there is really no need for having the images incorporated into the XML code.

After an avatar is received it is routed to a temporary directory and we are notified by a call to a pre registered function. The function then unpacks the file and sends the images that do not already exist to the image directory. The avatar XML file is sent to the "My Avatars" directory. It should currently be possible to receive avatars the following ways, providing that the platform supports it:
Bluetooth;
IR;
E-mail;
MMS;
WAP.

The avatar browser provides methods for sending the browsed files via various formats. It is more or less just a matter of packing the XML code with the part images and sending the packet file in stead of the XML file.

The only field of application described herein is the possibility to add avatars to existing contacts in the phonebook. However, Face It may also be a part of several existing functions in the mobile phone, including chat (Wireless Village) and MMS.

It is also possible to see the inventive application with the following functionality:
- Avatars with animated parts. Avatars with animated part such as blinking eyes or waving hands could make the avatars more attractive to use. Some animations could be triggered by events in the phone (e.g. at incoming calls the avatar picks up a phone).
- A text-free user-interface. Text always presents a problem in a mobile phone. The small display area does not allow longer texts, limiting the information to the user. As mobile phones are shipped to several countries all text has to be provided in all languages. If the text could in some way be replaced by graphics the interface would be more intuitive and there would be no text to translate. We have not found a solution to this problem with the current screen size.
- Avatar themes adding effects to all avatars.

To get full user interactivity it should be possible for the user (the consumer) to make her own parts, including drawing and placement of parts and baseparts. This could be done via a web interface or on an editor on the phone, e.g. the picture editor. The result would then be incorporated into the user-parts and distributed as a new library file. This way there is a never ending flood of new avatars.

A version of Face It which uses softkeys has been implemented. The softkey functionality gives the phone a more flexible and easy-to-use user-interface. At the same time it occupies 20 pixels at the bottom of the display and is preferably to be used with a bigger display. An embodiment of the softkey feature is illustrated in Fig. 11.

## Claims

1. Method for creating or modifying an avatar for a mobile platform, comprising the steps of:
- activating an avatar editor software;
- displaying an avatar;
- selecting an avatar attribute from a set of avatar attributes;
- selecting an avatar part from a set of avatar parts, for said avatar attribute; and
- saving the avatar with said avatar part allocated to said avatar attribute.

2. The method as recited in claim 1, comprising the step of saving information on the parts included in said avatar as an XML document.

3. The method as recited in claim 1 or 2, comprising the steps of:
- displaying said avatar on a first portion of a display;
- displaying a menu for selection of avatar attributes and parts on a second portion of said display; and
- displaying a change in said avatar on said first portion responsive to a selection made in said menu.

4. The method as recited in any of the preceding claims, wherein said avatar includes information associated with an image comprising a digitised visualisation of at least a head.

5. The method as recited in claim 4, wherein said avatar attributes relate to different parts of a human head.

6. The method as recited in claim 5, wherein said avatar parts relate to variants of said parts of a human head.

7. The method as recited in claim 5, wherein said avatar attributes relate to at least eyes, mouth and hair.

8. The method as recited in any of the preceding claims, wherein the step of displaying an avatar comprises the steps of:
- retrieving data from a parts buffer comprising a matrix of pointers to bitmaps, in which matrix avatar parts of said avatar are allocated to different layers; and
- displaying the avatar in least layer first order of said buffer.

9. The method as recited in claim 2 in combination with any of the preceding claims, comprising the steps of:
- packing XML code of said XML file together with an image data file to which said avatar relates, into a data segment; and
- sending said data segment from a first communication terminal to a second communication terminal.

10. Device for creating or modifying an avatar for a mobile platform, comprising a display and a computer program system, **characterised by** an avatar data library, holding data code representing avatar parts, and an avatar editor having an interface to said avatar data library, said editor including means for selecting, from said avatar data library, an avatar attribute from a set of avatar attributes, and an avatar part from a set of avatar parts, for said avatar attribute, and means for saving the avatar with said avatar part allocated to said avatar attribute.

11. The device as recited in claim 10, **characterised in that** said editor comprises means for saving information on the parts included in said avatar as an XML document.

12. The device as recited in claim 10 or 11, **characterised in that** said editor comprises display control means for displaying said avatar on a first portion of said display, displaying a menu for selection of avatar attributes and parts on a second portion of said display, and displaying a change in said avatar made by said editor on said first portion responsive to a selection made in said menu.

13. The device as recited in any of the preceding claims 10 - 12, **characterised in that** said avatar includes information associated with an image comprising a digitised visualisation of at least a head.

14. The device as recited in claim 13, **characterised in that** said avatar attributes relate to different parts of a human head.

15. The device as recited in claim 14, **characterised in that** said avatar parts relate to variants of said parts of a human head.

16. The device as recited in claim 14, **characterised in that** said avatar attributes relate to at least eyes, mouth and hair.

17. The device as recited in any of the preceding claims 10 - 16, **characterised in that** said editor comprises a parts buffer including a matrix of pointers to bitmaps, in which matrix avatar parts of said avatar are allocated to different layers, wherein said display control means are devised to display the avatar in least layer first order of said buffer.

18. The device as recited in claim 17, **characterised in that** said parts buffer has one row for each attribute and one column for each layer of an avatar.

19. The device as recited in any of the preceding claims 10 - 18, **characterised in that** said device is a portable radio communication terminal.

20. The device as recited in claim 11 and 19 in combination with any of the preceding claims 10 - 19, **characterised in that** said device comprises means for packing XML code of said XML file together with an image data file to which said avatar relates, into a data segment, and data transmission means for sending said data segment from a first communication terminal to a second communication terminal.

21. Data signal including a data segment comprising XML code of an XML file of claim 10 together with an image data file to which an avatar of claim 10 relates.

22. Computer program product for use in a computer system, comprising computer program code for making said computer system execute the steps of any of the preceding claims 1 - 9.
